# EUROPEAN PATENT APPLICATION

(11) **EP 1 974 793 A1**
(43) Date of publication of application: **01.10.2008**
(21) Application number: 07025000.6
(22) Date of filing: 21.12.2007
(51) Int. Cl.: B01D 46/24, C04B 38/00

(54) **Honeycomb filter**

(30) Priority: 30.03.2007 JP 2007093854; 27.08.2007 WO PCT/JP2007/066582
(71) Applicant: IBIDEN CO., LTD., Ogaki-shi Gifu 503-8604 (JP)
(72) Inventor: Sakashita, Keiichi, Gifu 501-0695 (JP)
(74) Representative: HOFFMANN EITLE

(57) **Abstract**

A honeycomb filter includes a pillar shape honeycomb structure that has a plurality of cells 28, which are arranged in a honeycomb shape and partitioned by cell walls 27, and a plug 30 that seals either one of open ends of each cell 28. In the honeycomb filter, the plug 30 has a clad 30a that occupies a peripheral region near the cell wall 27 and a core 30b that occupies a central region including the central axis of the cell 28. The Young's modulus of the clad 30a differs from the Young's modulus of the core 30b.

## Description

This disclosure relates to a honeycomb filter.

In recent years, for environmental protection, the demand for removing particulate matter (PM) or the like from exhaust gases discharged from an internal combustion engine, a boiler or the like has increased. In particular, regulations relating to the removal of graphite particulates (hereafter referred to as PM) that are discharged from diesel engines have become stricter in Europe, the United States, and Japan. A honeycomb filter having a honeycomb structure and referred to as a diesel particulate filter (DPF) has been used to capture and remove PM. A honeycomb filter is accommodated in a casing that is arranged in an exhaust pipe. The honeycomb filter includes a large number of cells, which extend longitudinally through the filter. The cells are partitioned by cell walls. In each pair of adjacent cells, one cell has an end closed by a plug at one side and the other cell has an end closed by a plug at the opposite side. This forms a honeycomb structure of which end surfaces (inlet side end surface and outlet side end surface) each have a checkerboard pattern in their entirety. In the honeycomb structure, exhaust gas enters the cells that are open at the inlet side end surface, that is, the cells that are sealed at the outlet side end surface of the honeycomb structure. The exhaust gas then passes through the cell walls that are porous to be discharged from the adjacent cells that are sealed at the inlet side end surface, that is, open at the outlet side end surface. In this state, the cell walls function as a filter that captures, PM discharged from, for example, a diesel engine. The PM captured in the cell walls is burned and removed by a heating means, such as a burner or a heater, or by the heat of exhaust gas. Is this the way, the filter is regenerated.

JP-A 2002-210723 (Patent document 1) describes an example of a honeycomb filter known in the prior art. The honeycomb filter of Patent document 1 describes filling cell ends of a honeycomb structure with a plug paste, the main component of which is ceramic particles, and drying or firing the plug paste to form a plug. To uniformly fill cell ends with the plug paste and improve adhesiveness of the plug paste to the walls of the cells, the structure is normally vibrated after filling the cell ends with the plug paste. However, cracks may be easily occurred in of in the honeycomb filter described in Patent Document 1, the plug and adjacent cell walls may crack if thermal stress increases when the vehicle is being used or when burning and removing PM to regenerate the filter. If the plug porosity is increased to increase the plug elasticity and reduce such stress, the thermal resistance or strength, such as impact resistance, of the plug may be lowered.

JP-A 2004-168030 (Patent document 2) describes a method for forming a honeycomb filter by generally molding a plug in correspondence with the cross-sectional shape of the cells in a honeycomb structure and arranging the plug in each cell. Then, a bonding agent is used to fill gaps formed between the plug and the cell. The main component of the bonding agent is the same as the main component of at least either one of the honeycomb structure and the plug to improve adhesiveness of the bonding agent.

However, the honeycomb filter described in Patent Document 2 is still insufficient from the viewpoint of crack prevention at the interface between the plug and cell.

The present invention has been made based on an observation that stress generated at the interface between the honeycomb structure (cell wall) and plug is reduced when materials having different physical properties are used for the plug at a core, which is located at the central region of a corresponding cell, and a clad, which is located at the peripheral region of the corresponding cell. It is an object of the present invention to reduce thermal stress generated at the interface between the plug and cell wall in a honeycomb filter.

One aspect of the present invention is a honeycomb filter including a pillar shape honeycomb structure, which has a plurality of cells partitioned by cell walls and arranged in a honeycomb shape, and a plug for sealing a selected one of open ends of each cell. The plug includes, in the open end of the corresponding cell, a clad that occupies a peripheral region of the corresponding cell and a core that occupies a central region of the corresponding cell, the central region including a central axis of the corresponding cell. The Young's modulus of the core differs from that of the clad.

In one example, the Young's modulus of the core is higher than the Young's modulus of the clad.

In one example, the core has an area ratio of 20 to 80% in a cross-sectional plane orthogonal to the central axis of the corresponding cell.

In one example, the core has a substantially circular cross-sectional plane that is orthogonal to the central axis of the corresponding cell.

In one example, the honeycomb structure includes a plurality of first cells having a first opening cross-sectional area and a plurality of second cells having a second opening cross-sectional area that differs from the first cross-sectional area. Either one of the plurality of first cells and the plurality of second cells are closed by the plug including the core and the clad, and the other one of the plurality of first cells and the plurality of second cells is closed by a plug that differs from the plug including the core and the clad.

In one example, the first opening cross-sectional area is greater than the second opening cross-sectional area, and the plug is arranged in open ends of the plurality of first cells.

In one example, the honeycomb structure has an upstream end through which exhaust gas enters and a downstream end from which exhaust gas is discharged. The plug is arranged in open ends of selected ones of the plurality of cells at the downstream end of the honeycomb structure.

In one example, the plug is a ceramic plug having a dual structure in which the core and the clad are each formed of a porous ceramic.
Fig. 1 is a schematic view showing an exhaust gas purification device.
Fig. 2 is a cross-sectional view showing a honeycomb filter according to a preferred embodiment of the present invention.
Fig. 3 is a perspective view showing a honeycomb member.
Fig. 4 is an enlarged cross-sectional view showing a honeycomb filter in a casing.
Fig. 5 is an enlarged cross-sectional view of a plug, with Fig. 5(a) being a cross-sectional view taken along line B-B, and Fig. 5(b) being a cross-sectional view taken along line A-A.
Fig. 6 is an enlarged cross-sectional view showing the method for forming a plug by performing pillar shaped member insertion, with Fig. 6(a) showing a process of filling a plug paste P1 for a clad and Fig. 6(b) shows a process of inserting a pillar shaped member.
Fig. 7 is an enlarged cross-sectional view showing a method for forming a plug by performing two-color extrusion.
Fig. 8 is an enlarged cross-sectional view showing a honeycomb filter according to another embodiment of the present invention.
Fig. 9 is a graph showing the relationship between the core area ratio and the maximum stress in examples and comparative examples.

A honeycomb filter according to a preferred embodiment of the present invention will now be discussed. The honeycomb filter is applicable for an exhaust gas purification device for a vehicle.

The exhaust gas purification device will first be discussed. In the present embodiment, the exhaust gas purification device is of a spontaneous ignition form in which the captured PM is burned and removed by the heat of exhaust gas to regenerate the honeycomb filter. However, the honeycomb filter is not limited to be used in an spontaneous ignition form exhaust gas purification device and PM processing may be performed in any manner.

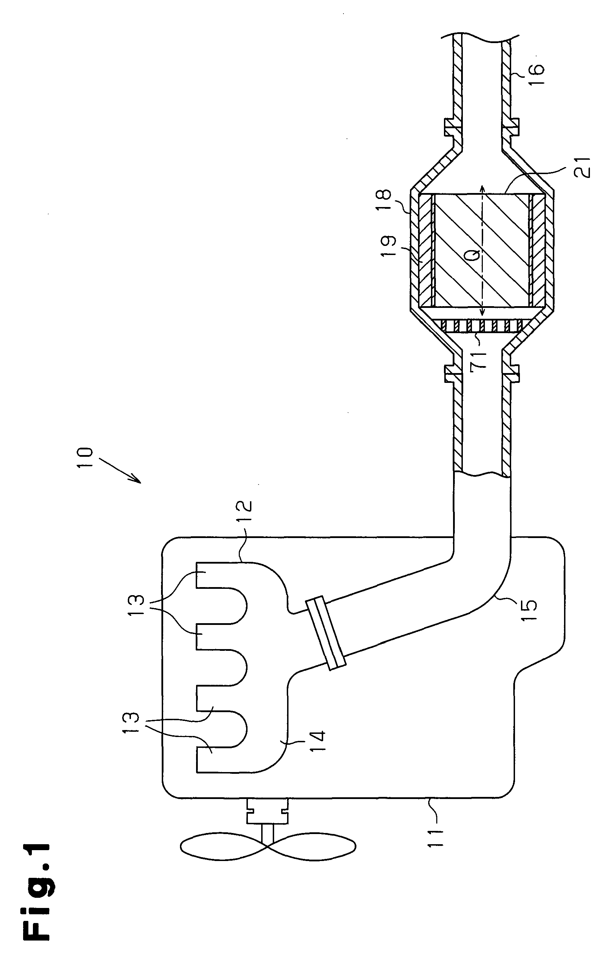

As shown in Fig. 1, an exhaust gas purification device 10 purifies, for example, exhaust gas discharged from a diesel engine 11. The diesel engine 11 includes a plurality of cylinders (not shown). An exhaust manifold 12, which comprises a metal material, is connected to the cylinders by a plurality of branching portions 13. The branching portions 13 are connected to a single manifold body 14. Accordingly, exhaust gas discharged from the cylinders is concentrated at a single location.

A first exhaust pipe 15 and a second exhaust pipe 16, which comprise metal materials, are arranged at positions downstream from the exhaust manifold 12. The first exhaust pipe 15 has an upstream end connected to the manifold body 14. A tubular casing 18, which comprises a metal material, is arranged between the first exhaust pipe 15 and the second exhaust pipe 16. The casing 18 has an upstream end connected to a downstream end of the first exhaust pipe 15 and a downstream end connected to an upstream end of the second exhaust pipe 16. As a result, the first exhaust pipe 15, the casing 18, and the second exhaust pipe 16 have internal regions in fluid communication, and exhaust gas flows through the internal regions of the first exhaust pipe 15, the casing 18, and the second exhaust pipe 16.

The casing 18 has a middle portion having a diameter that is larger than that of the exhaust pipes 15 and 16. Accordingly, the casing 18 has a larger inner area than the exhaust pipes 15 and 16. A honeycomb filter 21 is accommodated in the casing 18. A heat insulator 19 (holding sealing material), which is separate from the honeycomb filter 21, is arranged between the outer surface of the honeycomb filter 21 and the inner surface of the casing 18. A catalytic converter 71 is accommodated in the casing 18 upstream from the honeycomb filter 21. The catalytic converter 71 carries an oxidation catalyst, which is known in the art. The catalytic converter 71 oxidizes exhaust gas. Oxidation heat generated during the oxidation is transmitted into the honeycomb filter 21 to process PM in the honeycomb filter 21 (filter regeneration).

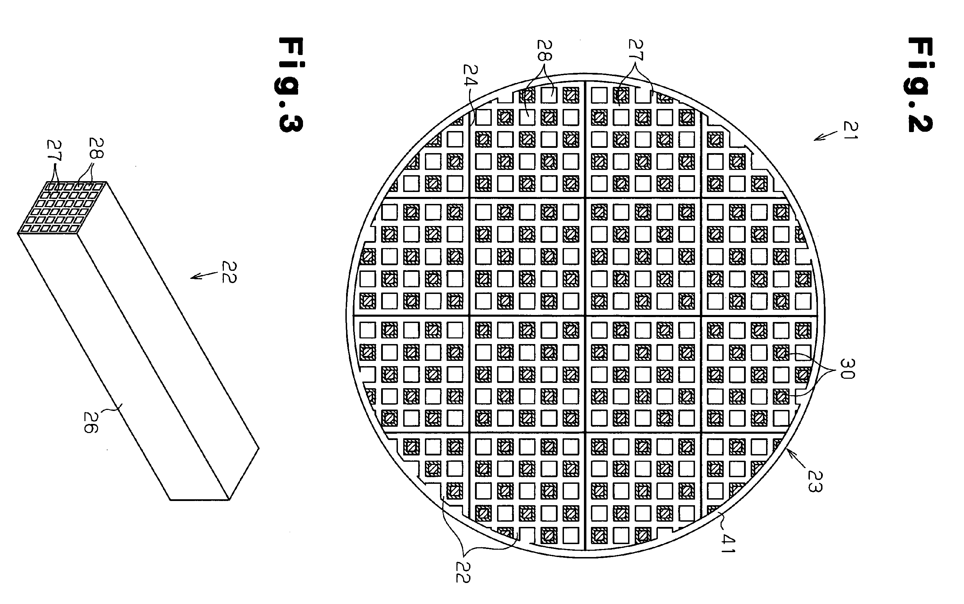

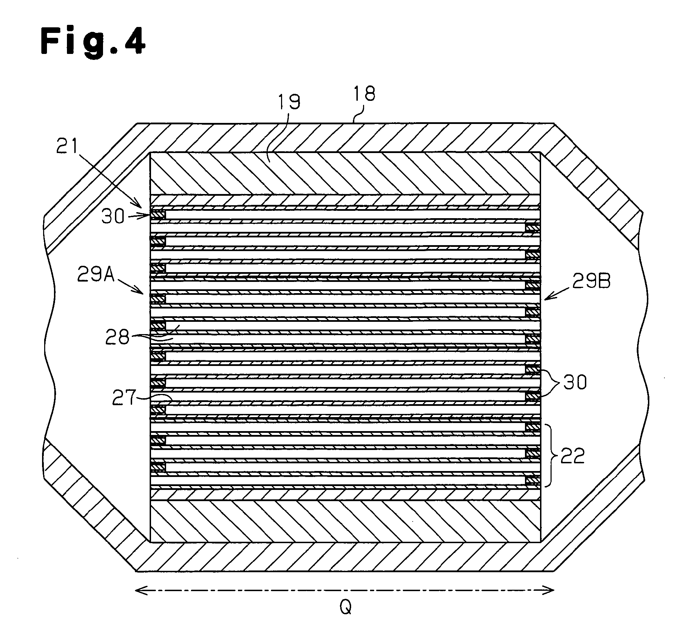

As shown in Fig. 2, the honeycomb filter 21 includes a cylindrical shape honeycomb structure 23 and plugs 30. The honeycomb structure 23 includes a plurality of (e.g., sixteen) square pillar-shaped honeycomb members 22. The plugs 30 are formed at predetermined positions in the ends of the honeycomb structure 23. The honeycomb filter 21 of the present embodiment is formed by drying honeycomb molded bodies, which are shaped identically to the honeycomb member 22, under predetermined conditions. Predetermined positions on each end of the dried honeycomb molded bodies are sealed with plugs and then dried and fired under predetermined conditions. A plurality of honeycomb fired bodies are bonded together with a bonding agent 24 to form an aggregation body. The aggregation body is then dried under predetermined conditions. The outer surface of the obtained aggregation body is cut so that the aggregation body has a circular cross-section. A paste for forming a coating layer is applied to the outer surface and dried to form a coating layer 41. This completes the honeycomb filter 21. In this specification, the term "cross-section" refers to a cross-sectional plane that is orthogonal to an axis Q of the honeycomb filter 21 (refer to Figs. 1 and 4). The bonding agent 24, which may contain an inorganic binder, an organic binder, inorganic fibers or the like, and may be a known composition.

As shown in Fig. 3, each honeycomb member 22 has a square cross-sectional shape and includes an outer wall 26 and cell walls 27 arranged inward from the outer wall 26. A material forming the outer wall 26 and the cell walls 27 of the honeycomb member 22, that is, the main material (main component) of the honeycomb structure 23, may be, for example, porous ceramic. The "main component" refers to a component that constitutes 50 mass percent or more of all the components forming the honeycomb structure 23. It is preferable that the main component constitutes 80% or more of the honeycomb structure 23.

Examples of such a porous ceramic include a nitride ceramic such as aluminum nitride, silicon nitride, boron nitride and titanium nitride; a carbide ceramic such as silicon carbide, zirconium carbide, titanium carbide, tantalum carbide and tungsten carbide; an oxide ceramic such as alumina, zirconia, cordierite, mullite, silica, titania and aluminum titanate; and the like. These different kinds of porous ceramic may be used solely. Alternatively, two or more of these different kinds of porous ceramic may be used in combination. Among these different kinds of ceramic, the use of silicon carbide, cordierite, or aluminum titanate is preferable due to their high thermal resistance and high impact resistance.

The material for the honeycomb structure 23 may contain impurities such as Al, Fe, B, Si, and free carbon. The cell walls 27 in the present embodiment may carry an oxidation catalyst formed by, for example, a metal element such as a platinum group element (e.g., Pt and the like), an alkali metal, an alkali earth metal and the like, their oxides or the like. When the cell walls 27 carry such an oxidation catalyst, the oxidation catalyst acts to lower the burning temperature of the PM captured on and in the cell walls 27. Further, the catalyst functions to convert harmful substances such as NOx to harmless substances.

A plurality of cells 28 (through-holes), which extend through the honeycomb member 22 in the longitudinal direction of the honeycomb member 22, are partitioned by cell walls 27 to form a honeycomb shape. Each cell 28 has a substantially square cross-section (refer to Figs. 2 and 3). As shown in Fig. 4, each cell 28 is hollow and extends from one end surface (upstream end surface 29A) to another end surface (downstream end surface 29B) in the direction of the axis Q and functions as a flow passage for exhaust gas, which serves as a fluid. On one of the end surfaces (upstream end surface 29A and downstream end surface 29B), each cell 28 has an open end that is sealed by a plug 30. As a result, a plurality of plugs 30 are arranged to form a checkerboard pattern in entirely on each end surface (upstream end surface 29A and downstream end surface 29B). That is, about one half of the plurality of cells 28 are open at the upstream end surface 29A, and the remaining cells 28 are open at the downstream end surface 29B.

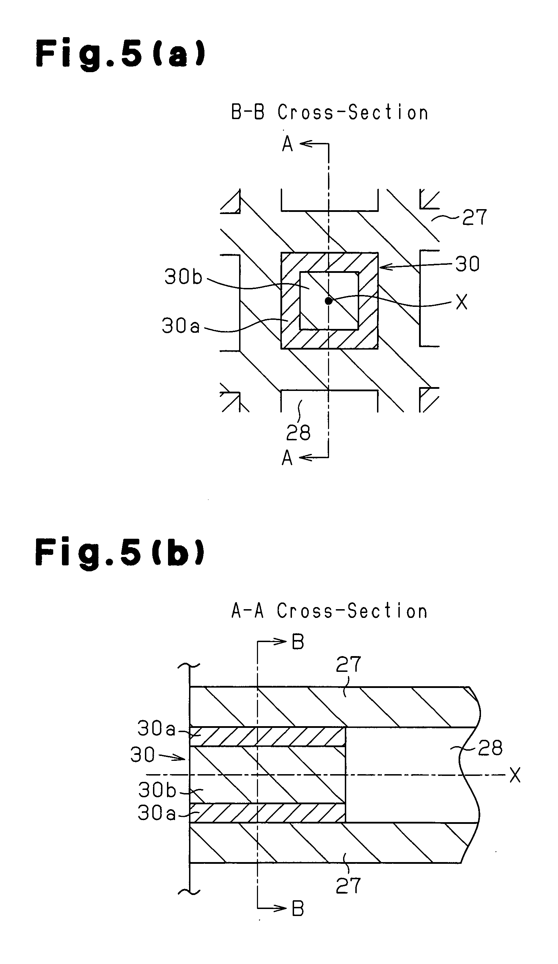

As shown in Fig. 5, the plug 30 in each cell 28 has a dual structure including a clad 30a (first plug member) and a core 30b (second plug member). The clad 30a is adjacent to the corresponding cell wall 27 and occupies a peripheral region of the corresponding cell 28. The core 30b is not in contact with the corresponding cell wall 27 and occupies a central region of the corresponding cell 28. The central region includes a central axis X of the cell 28. The clad 30a has a Young's modulus (E) that differs from that of the core 30b. The difference in the Young's moduli (E) suppresses the stress generated at the interface between the plug 30 and the cell wall 27. Depending on the selection of the materials or material compositions of the clads 30a and the cores 30b enable the clads 30a and the cores 30b to have different Young's moduli (E). When formed from different ceramic materials, the clads 30a and the cores 30b usually have different Young's moduli. Even with the same material, the clads 30a and the cores 30b may have different Young's moduli when varying the porosity of the plug members. It is generally known that when the porosity of a ceramic material is increased, the Young's modulus decreases.

It is preferable that the main material (main component) of both the clads 30a and the cores 30b be the same porous ceramic as the material used for the honeycomb structure 23 so that the clads 30a and the cores 30b have the same properties as the honeycomb structure 23. Examples of such porous ceramic include nitride ceramic such as aluminum nitride, silicon nitride, boron nitride and titanium nitride; carbide ceramic such as silicon carbide, zirconium carbide, titanium carbide, tantalum carbide, and tungsten carbide; and oxide ceramic such as alumina, zirconia, cordierite, mullite, silica, titania, and aluminum titanate. The "main component" refers to a component constituting 50 mass percent or more of the material for the plug 30.

The materials for the clads 30a and the cores 30b may contain impurities such as Al, Fe, B, Si, and free carbon in the same manner as the material for the honeycomb structure 23. The clads 30a and the cores 30b may have different Young's moduli (E) by appropriately selecting and adjusting the mixed amount of the above main materials (main component) and other components (impurities) or the like.

The Young's modulus (E), which is also referred to as a modulus of longitudinal elasticity, is a constant that determines the value of the strain relative to stress in an elasticity range. Based on the relationship between the strain amount and tensile stress or compressive stress in one direction, the Young's modulus (E) is calculated by dividing the stress (σ) by the strain (ε). The Young's modulus (E) that is used may be that known in the art for each ceramic material (e.g., 430 GPa for silicon carbide (JIS R 1602)). Alternatively, the Young's modulus (E) of each ceramic material that is measured with a measurement device may be used. JIS R 1602 specifies the Young's modulus measurement method for ceramic materials under room temperature, and JIS R 1605 specifies the Young's modulus measurement method for ceramic materials under a high temperature.

The Young's modulus varies depending on the temperature of the ceramic material. In the present embodiment, it is preferable that the Young's moduli of the clads 30a and the cores 30b differ under the usage temperature of the honeycomb filter (600 to 800°C). The Young's modulus may be measured using a measurement method known in the art. For example, a strain gauge method, a stationary test method, a lateral vibration method, an ultrasonic method (pulse echo overlap method) or the like may be used to measure the Young's modulus.

The content amount of a foam material in the above material and water in the plug paste that becomes a raw material may be adjusted when varying the Young's modulus by changing the porosity of each of the clads 30a and the cores 30b. Any foam material may be used as long as the selected material can be decomposed by the heat generated during usage of the honeycomb filter. Known foam materials such as ammonium acid carbonate, ammonium carbonate, amyl acetate, butyl acetate, diazoaminobenzene and the like may be used as the foam material. Further, resins such as thermoplastic resin and thermosetting resin, inorganic balloons, organic balloons or the like may also be used as the foam material.

Any thermoplastic resin may be used. For example, acrylic resin, phenoxy resin, polyether sulfone, polysulphone and the like may be used. Any thermosetting resin may be used. For example, epoxy resin, phenolic plastic, polyimide resin, polyester resin, bismaleimide resin, polyolefin resin, polyphenylene ether resin and the like may be used. These resins may have any shape. For example, the resins may be spherical, oval, or cubic, or may have an indefinite massive shape, or may be pillar-shaped, plate-like or the like. When the resin has a spherical shape, it is preferred that the average particle diameter be 30 to 300 µm.

The balloons include bubbles and hollow spheres. Any organic balloon may be used. For example, acrylic balloons, polyester balloons or the like may be used. Any inorganic balloon may be used. For example, alumina balloons, glass micro balloons, silas balloons, fly ash (FA) balloons, mullite balloons and the like may be used. It is preferable that the shape, average particle diameter, and the like of the balloons be the same as the resins described above.

The Young's modulus (E) of the plug 30 may be controlled by containing foam material, resins such as thermoplastic resin or thermosetting resin, and organic or inorganic balloons in the plug 30 for the reasons described below. During the manufacturing stage of the honeycomb filter in the present embodiment, the above-described materials are substantially uniformly dispersed in the plugs. The honeycomb filter is heated to a high temperature during actual use of the honeycomb filter. This decomposes and burns away the organic components including the foam material and the like to form pores in the plug. In this state, the Young's modulus (E) of the plug 30 is controlled by adjusting the porosity, the pore diameter, and the like of the pores.

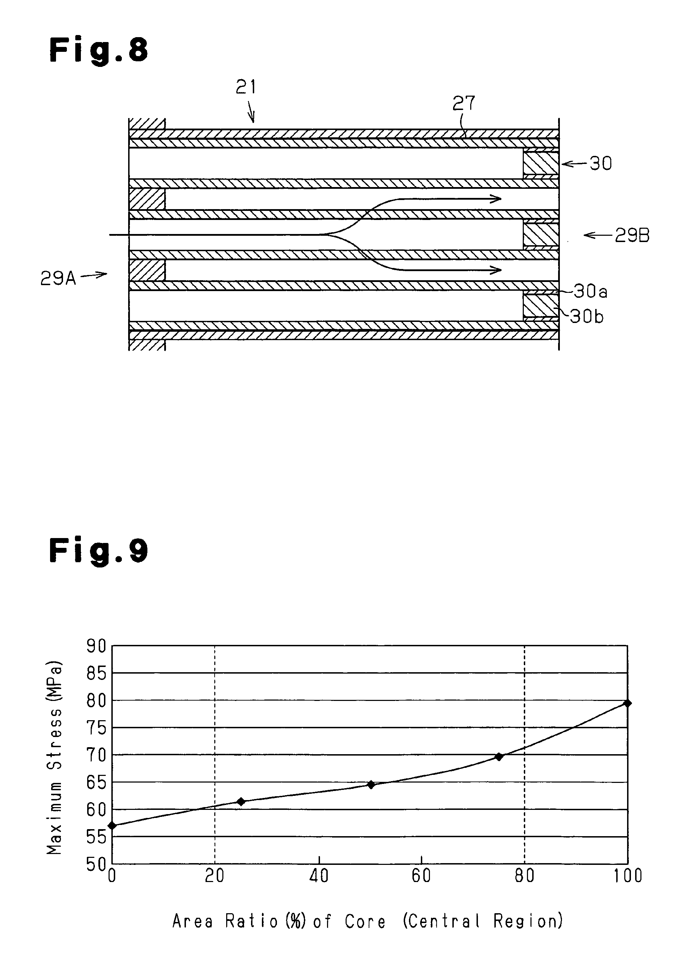

The Young's modulus of the core 30b, which occupies the central region of a cell, is preferably higher than the Young's modulus of the clad 30a, which occupies the peripheral region of the cell. This structure further reduces thermal stress generated at the interface between the plugs 30 and the cell walls 27. It is preferable that each core 30b occupy an area of 20 to 80% (hereafter referred to as an area ratio of the core) of the corresponding cell 28. More preferably, the area ratio of the core 30b is 30 to 70%, and still more preferably, 40 to 60%. When the area ratio of the core 30b is less than 20%, the core 30b is too small and difficult to manufacture. Further, when the core 30b has such a low area ratio, the clad 30a, which has a lower Young's modulus, would occupy a large part of the plug 30 and lower the mechanical strength of the plug 30. When the difference in the Young's modulus between the cell walls 27 and the clad 30a is significantly large, the difference in the contraction rate between the cell walls 27 and the clads 30a increases accordingly. Thus, cracks are apt to be occurred in a drying process during manufacture of the honeycomb filter. When the area ratio of the core 30b exceeds 80%, the thermal stress generated at the interface between the plugs 30 and the cell walls 27 (refer to Fig. 9) would increase. This may cause cracks.

The Young's modulus of the clads 30a and that of the cores 30b are only required to be different and is not particularly limited. However, it is preferred that the clads 30a or the cores 30b having the higher Young's modulus have a Young's modulus of 40 to 60 GPa, and more preferably, 50 to 60 GPa. The clad 30a or the core 30b having a lower Young's modulus preferably has a Young's modulus of 10 to 40 GPa, and more preferably 20 to 35 GPa. When the Young's modulus of the plug 30 is less than 10 GPa, the mechanical strength may be decreased. When the Young's modulus of the plug 30 exceeds 60 GPa, resistance to rapid temperature change (impact resistance) of the plug 30 may be decreased.

The shape of the cross-sectional plane of each core 30b orthogonal to the central axis X of the corresponding cell 28 is not particularly limited and may be polygonal such as substantially triangular, substantially tetragonal, substantially hexagonal, or substantially octagonal, or be substantially circular or the like. It is more preferable that the cross-sectional plane of the core 30b be substantially circular since thermal stress generated at the interface between the plugs 30 and the cell walls 27 is effectively reduced.

As shown in Fig. 2, a coating layer 41 is formed on the entire outer surface of the honeycomb structure 23. The coating layer 41 prevents the honeycomb filter 21 from being displaced in the casing 18. The coating layer 41 contains inorganic particles, an inorganic binder, an organic binder and the like and may contain inorganic fibers.

A method for manufacturing the honeycomb filter 21 of the present embodiment will now be described. First, a method for manufacturing a honeycomb molded body that is shaped identically to the honeycomb member 22 will be described. The honeycomb molded body is formed by extruding a raw material paste containing ceramic particles (e.g. silicon carbide particles described above), which is the main raw material for the honeycomb molded body. The raw material paste may further contain a firing aid, such as aluminum, boron, iron and carbon; an organic binder (e.g. methylcellulose, carboxymethyl cellulose, hydroxyethyl cellulose, polyethyleneglycol and the like); water and the like. The "raw material paste" refers to a "raw material for forming the honeycomb structure 23" in this specification.

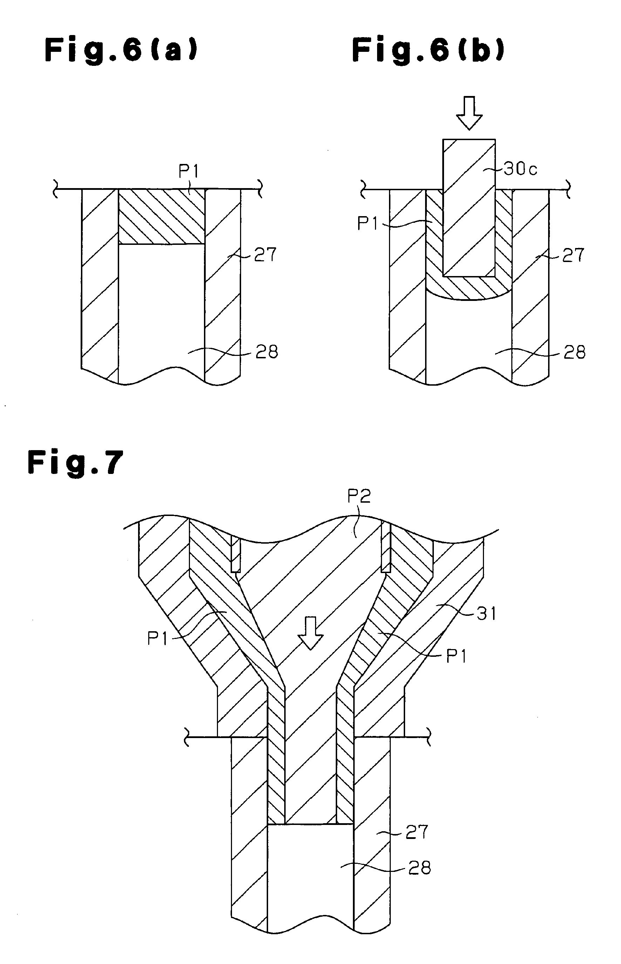

Next, open ends of predetermined cells 28 are sealed with the plugs 30. In detail, a clad 30a is arranged to occupy a peripheral region adjacent to the cell wall 27 of the corresponding cell 28, and a core 30b is arranged to occupy a central region of the cell 28. For example, as shown in Fig. 6, a plug paste P1, which ultimately forms the clad 30a, is first filled in each cell 28 (refer to Fig. 6(a)), and then a pillar shaped member 30c, which forms the core 30b, is pressed into the plug paste P1 to form the plug 30 (refer to Fig. 6(b)). An appropriate known method, such as an extrusion method, using a mask having openings corresponding to the plug pattern, may be used to fill each cell 28 with the plug paste P1.

Alternatively, the plug paste P1 that ultimately forms the clad 30a and a plug paste P2 that ultimately forms the core 30b may be filled in each cell 28 by performing a two-color extrusion method using a two-color extrusion machine (or two-layer extrusion machine) 31 to fill the open end of each cell 28 as shown in Fig. 7. The plug pastes P1 and P2 may be formed mainly of ceramic particles (e.g. silicon carbide particles described above), and may additionally contain a firing aid, such as aluminum, boron, iron and carbon; a lubricant agent (e.g. polyoxyethylene mono butyl ether); a solvent (e.g. diethylene glycol mono-2-ethylhexyl ether); a dispersing agent (e.g. phosphate ester compound); a binder (e.g. methylcellulose, carboxymethyl cellulose, hydroxyethyl cellulose, polyethyleneglycol and the like) and the like. To control the porosity of the plug 30, the plug pastes P1 and P2 may further contain a foam material such as a thermoplastic resin, a thermosetting resin, inorganic balloons or organic balloons. The composition or the porosity of each of the plug pastes P1 and P2 is selected so that the clads 30a and the cores 30b have different Young's moduli. The pillar shaped members 30c may be prepared by molding the plug paste P2 into a predetermined shape and drying the plug paste P2.

The filter molded body, in which predetermined positions are filled with the plug paste, is dried, degreased, and fired under predetermined conditions to form a fired body. A plurality of fired bodies are bonded together with a bonding agent 24. The aggregation body is then dried under predetermined conditions and cut to have a circular cross-section. A coating layer 41 is then formed on the outer surface of the cut aggregation body. This completes the desired honeycomb filter 21.

The honeycomb filter 21 of the present embodiment has the advantages described below.
(1) The honeycomb filter 21 of the present embodiment includes the plugs 30, each of which is formed by the clad 30a that occupies the peripheral region of the corresponding cell 28 near the cell wall 27 and the core 30b that occupies the central region of the corresponding cell 28. The central region includes the central axis X of the corresponding cell 28. The clads 30a and the cores 30b have different Young's moduli. Accordingly, thermal stress generated at the interface between the plugs 30 and the cell walls 27 is suppressed. Further, cracks are prevented from being occurred near the interface between the plugs 30 and the cell walls 27.
   In particular, in a honeycomb filter that uses thin cell walls 27 to reduce the weight of the honeycomb filter and a honeycomb filter that uses cell walls 27 with a high porosity to prevent PM clogging, stress relaxation suppresses cracking of the cell walls 27 during usage (especially, PM processing (filter regeneration)).
(2) In the present embodiment, the Young's modulus of the core 30b, which occupies the central region of a cell, is higher than the Young's modulus of the clad 30a, which occupies the peripheral region of the cell. This further effectively reduces thermal stress and suppresses cracking.
(3) In the present embodiment, it is preferred that each core 30b has a cross-section plane orthogonal to the central axis X of the plug 30 that is shaped to be substantially circular. This structure effectively reduces thermal stress generated at the interface between the plugs 30 and the cell walls 27.
(4) In the present embodiment, it is preferred that the cell walls 27 carry an oxidation catalyst. In this case, the catalytic action of the oxidation catalyst easily burns and removes the PM captured on and in the cell walls 27.
(5) In the present embodiment, the honeycomb structure 23 is formed by bonding a plurality of the honeycomb members 22 with the bonding agent 24. As compared with a honeycomb structure formed by a single honeycomb member 22, the honeycomb structure 23 of the present embodiment reduces thermal impact generated between the members of the honeycomb structure when PM is burned. This effectively prevents cracking of the honeycomb structure 23.

The above embodiment may be modified in the following forms.

In the above embodiment, the open end of each cell 28 at one end of the honeycomb filter 21 (upstream end surface 29A or downstream end surface 29B) is sealed by the plug 30, which is formed by the clad 30a and the core 30b that have different Young's moduli. However, the plug 30 does not have to be formed by the clad 30a and the core 30b on both ends of the honeycomb filter 21 (upstream end surface 29A and downstream end surface 29B). It is only required that only one of the two ends of the honeycomb filter 21 include the plug 30 that is formed by the clad 30a and the core 30b.

In the above embodiment, some of the plugs may be replaced with conventional plugs as long as the advantages of the present invention are not affected. In other words, the plugs do not alls have to be formed by the clads 30a and the cores 30b that have different Young's moduli.

In the above embodiment, it is preferred that the plugs 30, which are formed by the clads 30a and the cores 30b having different Young's moduli, be arranged at least at the downstream side of the cells 28. When the accumulating PM captured on the cell walls is burned and removed by a heating means such as a burner or a heater, or by the heat of exhaust gas, more heat load is applied to the downstream side of the honeycomb filter. Thus, such a structure prevents cracks from being occurred at the downstream side of the honeycomb filter at which a large heat load is applied.

The honeycomb filter may include cells 28 having open ends at the upstream side and open ends at the downstream side with respect to the flow of exhaust gas having different cross-sectional areas, for example, by including cells 28 having large open ends on the upstream side (upstream end surface 29A) through which exhaust gas enters and cells 28 having small open ends on the downstream side (downstream end surface 29B) through which exhaust gas is discharged, as shown in Fig. 8. In this case, a greater area usually increases the degree of expansion and contraction. Thus, it is preferred that at least the open ends of cells 28 with the larger cross-sectional areas (the downstream end surface 29B) be sealed by the plugs 30 that are formed by the clads 30a and the cores 30b having mutual different Young's moduli. In this case, the open ends of cells 28 with the smaller cross-sectional areas (the upstream end surface 29A) may be sealed by plugs not having a core-clad structure.

In the above embodiment, the plurality of honeycomb members 22 are bonded together and the outer surface is cut to form the cylindrical shape honeycomb filter. Instead of this procedure, a plurality of honeycomb members having predetermined shapes in accordance with the shape of the honeycomb filter may be formed in advance, and these honeycomb members may be bonded together to form the cylindrical shape honeycomb filter. This eliminates the process of cutting the outer surface.

In the above embodiment, the plurality of honeycomb members 22 are bonded to form the honeycomb filter 21 (separated type). Alternatively, a single honeycomb member may form the honeycomb filter (integrated type).

In the above embodiment, the pillar shaped member 30c is a pillar having a constant cross-sectional shape. However, the distal end of the pillar shaped member 30c may be tapered or protruded to facilitate insertion into the cell 28.

The central axis of the core 30b does not necessarily have to coincide with the central axis X of the cell 28. The central axis of the core 30b may deviate from the central axis X of the cell 28.

Examples of the present invention will now be described. The present invention is not limited to the examples.

### <Manufacture of the Honeycomb Filter>

First, 7000 wt% of alpha silicon carbide particles having an average particle diameter of 10 µm and 3000 wt% of alpha silicon carbide particles having an average particle diameter of 0.5 µm were wet blended together. Then, 570 wt% of an organic binder (methyl cellulose) and 1770 wt% of water were added to 10000 wt% of the resulting mixture, which was kneaded to prepare a mixed composition. Then, 330 wt% of a plasticizing agent (UNILUB manufactured by NOF CORPORATION) and 150 wt% of a lubricant agent (glycerin) were added to the mixed composition, which was kneaded and extruded to form a pillar-shaped molded body as shown in Fig. 3. Each cell 28 was formed to have a substantially square shape with each side being 1.165 mm and the cell wall 27 having a thickness of 0.125 mm.

Next, the molded body was dried using a microwave drier or the like to obtain a dried ceramic body. A clad 30a was filled in a peripheral region of a cell 28 and a core 30b was filled in a central region of the cell 28 to seal an open end of the cell 28. More specifically, the clads 30a and the cores 30b were formed using the plug paste prepared from the same material as the molded body. A material for changing the porosity was added to the plug paste for the clads 30a and the plug paste for the cores 30b to control the porosity of each of the clads 30a and the cores 30b. This manufactures the clads 30a and the cores 30b having the predetermined Young's moduli shown in Table 1. As a method for filling the plugs 30 into the cells 28, the pillar shaped member 30c functioning as the core 30b was first formed from the plug paste. Although the illustrated pillar shaped member 30c is a square pillar, the pillar shaped member 30c may have other shapes. The length of each side of the cross-section of the pillar shaped member 30c in each example was controlled so that the area ratio of the core 30b was 25 to 75% of the orthogonal cross-sectional plane of the cell 28 (1.165 mm × 1.165 nm = 1.357 mm²) as shown in Table 1. For example, to set the area ratio of the core 30b at 75%, each side of the pillar shaped member 30c was controlled to 1.009 mm. To set the area ratio of the core 30b at 50%, each side of the pillar shaped member 30c was adjusted to 0.824 mm. Afterwards, the plug paste P1 for the clads 30a was filled in the cells 28. Before the clads 30a were dried, the pillar shaped members 30c were arranged to occupy the central regions of the cells 28.

Next, the molded body was dried again using a drying apparatus, degreased at 400°C, and fired for three hours in an argon atmosphere at 2200°C under normal pressure. This completed a honeycomb member 22 of which plugs 30 were formed by fired silicon carbide having the porosity and Young's modulus shown in Table 1. The cell walls of the fired honeycomb member 22 were formed to have a porosity of 42% and a Young's modulus value of 58.1 GPa.

To prepare a bonding agent paste for the bonding member, 30 wt% of alumina fibers having an average fiber length of 20 µm, 21 wt% of silicon carbide particles having an average particle diameter of 0.6 µm, 15 wt% of a silica zol, 5.6 wt% of carboxymethyl cellulose, and 28.4 wt% of water were kneaded. The bonding agent paste was applied to the side surface of the honeycomb fired body. Sixteen (four by four) honeycomb fired bodies were formed in the same manner and were bonded into an aggregation body. The aggregation body was then dried at 120°C. This solidified the bonding agent paste and formed a ceramic block. The thickness of the solidified bonding agent paste (bonding agent layer), that is, the interval between the adjacent honeycomb fired bodies, was 1.0 mm. Grinding was performed on the outer surface of the ceramic block with a diamond cutter to adjust the shape of the ceramic block into a cylindrical shape. A coating layer paste, formed from the same material as the material for the bonding agent paste, was used to form a coating layer having a thickness of 0.2 mm on the outer surface of the ceramic block. The coating layer was dried at 120°C. This completed the cylindrical shape honeycomb filter 21 having a diameter of 143.8 mm and a length of 150 mm, of which outer surface was coated with the coating layer.

### <Regeneration Test>

The honeycomb filter 21 of each example was arranged in the exhaust gas purification device 10 to conduct an exhaust gas purification test by driving the engine at a speed of 3000 min⁻¹ and a torque of 50 Nm for a predetermined time and capturing PM. Next, the engine was driven at a speed of 4000 min⁻¹ under full load. When the temperature of the honeycomb filter 21 became constant at around 700°C, the engine speed and torque were changed to 1050 min⁻¹ and 30 Nm in order to forcibly burn the PM. In this state, the honeycomb filter 21 of each example was observed for the occurrence and enlargement of cracks near the interface between the plugs 30 and the cell walls 27.

### <Estimation of Maximum Stress>

For the honeycomb filter 21 of each example prepared in the manner described above, the maximum stress generated at the interface between the plugs 30 and the cell walls 27 was estimated through a simulation (using stress simulation software "ANSYS" by ANSYS, Inc.). Table 1 and Fig. 9 show the results.

**Table 1**

| | Clad (Peripheral Region) | | | Core (Central Region) | | | Maximum Stress (MPa) | Cracks After Regeneration Test |
|---|---|---|---|---|---|---|---|---|
| | Material | Young's Modulus (E) (GPa) | Area ratio (%) | Material | Young's Modulus (E) (GPa) | Area Ratio (%) | | |
| Example 1 | SiC | 29.1 | 25 | SiC | 58.1 | 75 | 69.6 | Not Observed |
| Example 2 | SiC | 29.1 | 50 | SiC | 58.1 | 50 | 64.7 | Not Observed |
| Example 3 | SiC | 29.1 | 75 | SiC | 58.1 | 25 | 61.6 | Not Observed |
| Example 4 | SiC | 58.1 | 50 | SiC | 29.1 | 50 | 71.9 | Not Observed |
| Comparative Example 1 | - | - | 0 | SiC | 58.1 | 100 | 79.5 | Observed |
| Comparative Example 2 | SiC | 29.1 | 100 | - | - | 0 | 57.3 | Observed |

As shown in Table 1 and Fig. 9, comparative example 1, which uses plugs 30 formed by pillar shaped members having a Young's modulus of 58.1 GPa, has a maximum stress of 79.5 MPa at the interface between the plugs 30 and the cell walls 27. For the honeycomb filter of comparative example 1, cracks were occurred end enlarged after the regeneration test. Comparative example 2, which uses plugs 30 formed by only the plug paste P1 for the clads 30a, has a high porosity. The plugs 30 of the honeycomb filter of comparative example 2 have a lower strength. For the honeycomb filter of comparative example 2, cracks were occurred and enlarged after the regeneration test.

Examples 1 to 4 use the plugs 30 that have a dual structure and formed by the clads 30a and the cores 30b respectively corresponding to the peripheral regions and central regions of the cells and having different Young's moduli (porosity values). The plugs 30 of examples 1 to 4 have lower maximum stress at the interface between the plugs 30 and the cell walls 27 than the honeycomb filter of comparative example 1. Further, cracks were neither occurred nor grew after the regeneration test.

A comparison between examples 2 and 4 reveals that the stress decreases as the Young's modulus of the cores 30b increases when the cores 30b have the same area ratio. A comparison of examples 1 to 3 reveals that the maximum stress decreases as the area ratio of the clads 30a having a lower Young's modulus increases.

### <Evaluation of Core Shape>

Blocks 30c having cross-sectional planes orthogonal to the longitudinal direction that differ in shape were prepared. More specifically, pillar shaped members 30c having cross-sectional planes with a regular tetragonal shape, a regular orthogonal shape, and a circular shape were prepared. For these cases, the maximum stress generated at the interface between the plugs 30 and the cell walls 27 was estimated through a simulation (using stress simulation software "ANSYS" by ANSYS, Inc.). The area ratios of the clad 30a and the core 30b at the cross-sectional plane of each cell 28 were set at 50%. Table 2 shows the results.

**Table 2**

| | Clad (Peripheral Region) | | | Core (Central Region) | | | | Maximum Stress (MPa) |
|---|---|---|---|---|---|---|---|---|
| | Material | Young's modulus (E) (GPa) | Area Ratio (%) | Cross-Sectional Shape | Material | Young's Modulus (E) (GPa) | Area Ratio (%) | |
| Example 5 | SiC | 29.1 | 50 | Tetragon | SiC | 58.1 | 50 | 64.7 |
| Example 6 | SiC | 29.1 | 50 | Octagon | SiC | 58.1 | 50 | 61.9 |
| Example 7 | SiC | 29.1 | 50 | Circle | SiC | 58.1 | 50 | 61.3 |

For a polygon, the results in Table 2 reveal that the maximum stress decreases as the number of a sides increase. Further, the maximum stress is lower when the pillar shaped member 30c has a circular cross-section than when the pillar shaped member 30c has a polygonal cross-section. Cases in which the porosity is controlled to obtain different Young's moduli are shown in this example. Although there is no data, it is considered that when using different ceramic materials to obtain different Young's moduli, substantially the same numerical results as given above are obtained.

## Claims

1. A honeycomb filter including a pillar shape honeycomb structure, which has a plurality of cells partitioned by cell walls and arranged in a honeycomb shape, and a plug for sealing a selected one of open ends of each cell, the honeycomb filter being **characterized in that**:
the plug includes, in the open end of the corresponding cell, a clad that occupies a peripheral region of the corresponding cell and a core that occupies a central region of the corresponding cell, the central region including a central axis of the corresponding cell; and
the Young's modulus of the core differs from the Young's modulus of the clad.

2. The honeycomb filter according to claim 1, **characterized in that** the Young's modulus of the core is higher than the Young's modulus of the clad.

3. The honeycomb filter according to claim 1 or 2, **characterized in that** the core has an area ratio of 20 to 80% in a cross-sectional plane orthogonal to the central axis of the corresponding cell.

4. The honeycomb filter according to any one of claims 1 to 3, **characterized in that** the core has a substantially circular cross-sectional plane that is orthogonal to the central axis of the corresponding cell.

5. The honeycomb filter according to any one of claims 1 to 4, **characterized in that**:
the honeycomb structure includes a plurality of first cells having a first opening cross-sectional area and a plurality of second cells having a second opening cross-sectional area that differs from the first cross-sectional area; and
either one of the plurality of first cells and the plurality of second cells are sealed by the plug including the core and the clad, and the other one of the plurality of first cells and the plurality of second cells is sealed by a plug that differs from the plug including the core and the clad.

6. The honeycomb filter according to claim 5, **characterized in that** the first opening cross-sectional area is greater than the second opening cross-sectional area, and the plug is arranged in open ends of the plurality of first cells.

7. The honeycomb filter according to any one of claims 1 to 6, **characterized in that**:
the honeycomb structure has an upstream end through which exhaust gas enters and a downstream end from which exhaust gas is discharged; and
the plug is arranged in open ends of selected ones of the plurality of cells at the downstream end of the honeycomb structure.

8. The honeycomb filter according to any one of claims 1 to 7, **characterized in that** the plug is a ceramic plug having a dual structure in which the core and the clad are each formed of a porous ceramic.
